# EUROPÄISCHE PATENTSCHRIFT

(11) **EP 0 670 292 B1**
(45) Veröffentlichungstag und Bekanntmachung des Hinweises auf die Patenterteilung: **13.08.1997**
(21) Anmeldenummer: 95101577.5
(22) Anmeldetag: 07.02.1995
(51) Int. Cl.: C04B 28/02

(54) **Chlorid- und nitritfreier Abbinde- und Erhärtungsbeschleuniger und Verfahren zur Beschleunigung des Abbindens und Erhärtens von hydraulischen Bindemitteln und diese enthaltenden Gemischen**
Chloride-free and nitrite-free set and hardening accelerator and method for accelerating the setting and hardening of hydraulic binders and mixtures containing them
Accélérateur de prise et de durcissement exempt de chlorides et nitrites et méthode d'acceleration de la prise et du durcissement des liants hydrauliques et des mélanges les contenants

(30) Priorität: 03.03.1994 CH 624/94
(43) Veröffentlichungstag der Anmeldung: 06.09.1995
(73) Patentinhaber: Sika AG, vorm. Kaspar Winkler & Co., CH-8048 Zürich (CH)
(72) Erfinder: Bürge, Theodor A., CH-8954 Geroldswil (CH); Mäder, Urs, Dr., CH-8500 Frauenfeld (CH); Wombacher, Franz, Dr., CH-8966 Oberwil-Lieli (CH); Marazzani, Beat, CH-8037 Zürich (CH)
(74) Vertreter: Blum, Rudolf Emil Ernst

(56) Entgegenhaltungen:
- EP-A- 0 558 336
- WO-A-86/02921
- FR-A- 2 280 600
- US-A- 4 473 405
- CHEMICAL ABSTRACTS, vol. 105, no. 8, 25.August 1986 Columbus, Ohio, US; abstract no. 65291b,

## Beschreibung

Gegenstand der vorliegenden Erfindung ist ein chlorid- und nitritfreier Abbinde- und Erhärtungsbeschleuniger, der Nitrat oder Sulfit, Thiocyanat, Alkanolamin und Carbonsäure resp. entsprechende Derivate enthält und ein Verfahren zur Beschleunigung des Abbindens von Bindemitteln, wie Zement, Mischzement, Puzzolanen und daraus hergestelltem Mörtel und Beton durch einen derartigen Beschleuniger. Anwendungsmöglichkeiten dieses Beschleunigers resp. Verfahrens liegen in der Herstellung vorfabrizierter Elemente und dem Beschleunigen von auf der Baustelle hergestelltem Beton. Im ersten Falle kann die übliche Erhärtungsbeschleunigung durch Wärme (Elektro- oder Oelheizung oder Dampf) verkürzt oder gar eliminiert werden. Im zweiten Falle können die Ausschalfristen für den Beton verkürzt werden oder es kann auch bei tiefer Temperatur weiter betoniert werden. Anwendungen ergeben sich auch bei der Herstellung rasch abbindender Zement- und Mörtelmischungen, speziell zum Fixieren von Fertigteilen, Gussstücken etc.

Es sind bereits viele Substanzen bekannt, welche das Abbinden und Erhärten von Beton beschleunigen. Die gebräuchlichsten sind u.a. Nitrate, Formiate, Thiocyanate, Nitrite, Mono-, Di- und Triethanolamine, stark alkalisch reagierende Stoffe wie Alkalihydroxide, Alkalicarbonate, Alkalisilikate, Alkalialuminate sowie Erdalkalichloride. Bei den stark alkalisch reagierenden Stoffen treten unerwünschte Belästigungen des Verarbeiters auf.

Betontechnologisch gesehen reduzieren stark alkalische Abbindebeschleuniger die Endfestigkeiten, vergrössern das Schwinden, was zu Rissbildung führen kann und deshalb die Dauerhaftigkeit eines Bauwerkes in Frage stellt.

Chloridhaltige Abbindebeschleuniger sind in der Regel auf einer Baustelle unerwünscht, weil sie sowohl an den Armierungseisen im Beton wie auch an Baustellengeräten zur Korrosion führen können.

Im weiteren ist bekannt, dass chloridhaltige Abbindebeschleuniger die Chemikalienbeständigkeit, vor allem die Sulfatbeständigkeit des Zementes, stark reduzieren.

Nitrate sind seit langem als "Frostschutzmittel" bekannt, d.h. sie bewirken eine Abbindebeschleunigung bei tiefen Temperaturen. Bei Raumtemperaturen ist die Wirkung der Nitrate dagegen unbedeutend (Bsp. US 4 337 094, Tokan).

Calciumformiat wird schon 1977 (DE 2 611 419) als Erhärtungsbeschleuniger für Portlandzement beschrieben, doch liegt seine Wirkung deutlich unter derer des CaCl₂. Danebst weist es eine zu geringe Löslichkeit in Wasser auf.

Ein sehr guter Abbindebeschleuniger ist das Ca[NO₂]₂, doch ist sein Einsatz wegen der hohen Giftigkeit in Europa in den notwendigen Konzentrationen nicht denkbar (UdSSR 563 392, 1977).

Die Kombination eines Thiocyanats mit einem Alkanolamin erhöht gemäss US 4 373 956 (Rosskopf) die Erhärtungsgeschwindigkeit wie auch die Druckfestigkeiten von zementösen Produkten.

Organische Abbindebeschleuniger sind verschiedene beschrieben, doch auf dem Markt sind nur wenige von Bedeutung. So wirken Mono-, Di- und Triethanolamin in Kombination mit Nitraten bei tiefen Temperaturen beschleunigend auf das Abbinden von Zement, und EP 0 558 336 offenbart die Verwendung üblicher Beschleuniger, insbesonders von Ca(NO₃)₂ in Kombination mit Aminosäure-resp. Aminosulfonsäurederivaten.

Eine Kombination von Triethanolamin mit Aluminiumsulfat erhöht gemäss US 3 782 991 (Bürge) die Frühfestigkeit von Baumaterialien.

Die Eignung von alpha-Hydroxycarboxylverbindungen als Abbindebeschleuniger für Portlandzement wurde 1981 von Schutz (Sika, US 4 264 367) patentiert. US 4 473 405 (Gerber) beschreibt einen Beschleuniger aus einem Nitrat, einem Alkanolamin und einem Thiocyanat, und WO-A-86 02921 offenbart ferner den Zusatz von Poly(N-methylol)-glycoluril.

Die korrosionsinhibierende Wirkung von Alkanolaminen auf Stahl ist z.B. in US 4 726 914 beschrieben. Die gebräuchlichen und/oder die oben beschriebenen Beschleuniger weisen alle einen oder mehrere Nachteile auf. Sie wirken nur bei tiefen Temperaturen, nicht aber bei Raumtemperatur, sie erhöhen die Frühfestigkeit, reduzieren jedoch die Endfestigkeit gegenüber einer entsprechenden Probe ohne Zusatz, sie verkürzen die Verarbeitungszeit oder sind toxisch oder korrosiv.

Ziel der vorliegenden Erfindung war es deshalb, einen chlorid- und nitritfreien Abbinde- und Erhärtungsbeschleuniger bereitzustellen, der die obengenannten Nachteile nicht oder in stark vermindertem Masse aufweist.

Ueberraschenderweise wurde nun gefunden, dass sich mit der erfindungsgemässen, einzigartigen Kombination von 4 Komponenten, Beschleuniger herstellen lassen, welche hohe Anfangs- und Endfestigkeiten bei extrem langer Verarbeitungszeit der Beton- oder Mörtelmischungen ergeben.

Die erfindungsgemässen Kombinationen beschleunigen nicht nur bei tiefen Temperaturen sondern auch bei Raumtemperatur, sowie in warmem Klima (bis etwa 35°C).

Weitere technische Vorteile sind die Chlorid- und Nitritfreiheit, sowie die Tatsache, dass die Mischungen, nicht zuletzt dank der Zugabe des Alkanolamins, auf Betonstahl nicht korrosiv wirken.

Die erfindungsgemässen Abbinde- und Erhärtungsbeschleuniger bestehen vorzugsweise gänzlich oder zum Teil aus (1) mindestens einem Alkali-, Erdalkali- oder Ammoniumthiocyanat, (2) mindestens einem Alkanolamin, (3) mindestens einer alpha-Hydroxy- oder alpha-Aminocarbonsäure oder deren Alkali-, Erdalkali- oder Ammoniumsalzen und (4) mindestens einer Nitrat- oder Sulfitkomponente, insbesonders Alkali-, Erdalkali- oder Ammoniumnitrat und/oder einem Sulfit.

Das Alkanolamin kann entweder direkt oder als Salz einer organischen oder anorganischen Säure oder einer Mischung derselben eingesetzt werden. Als organische Säuren eignen sich Essigsäure und Ameisensäure, resp. die Carbonsäurekomponente, insbesonders alpha-Hydroxycarbonsäuren und alpha-Aminocarbonsäuren. Als anorganische Säuren eignen sich Schwefelsäure und Borsäure resp. Salpetersäure, die einen mengenmässigen Anteil an die Nitratkomponente liefert.

Die erfindungsgemässen Zusammensetzungen eignen sich zur Beschleunigung des Abbindens und Erhärtens eines hydraulischen Bindemittels, wie Zement, in reiner Form oder als Abmischung mit latent hydraulischen Bindemitteln wie Flugasche, Hochofenschlacke, Oelschieferabbrand oder Silica fume, sowie daraus hergestelltem Mörtel und Beton.

Die erfindungsgemässen Beschleuniger können als Pulver, gelöst in Wasser oder in Kombination mit anderen Betonzusatzmitteln wie Hochleistungsverflüssigern, Verflüssigern, Silica Slurries, Dispergiermitteln und/oder weiteren Abbindebeschleunigern zur Anwendung gelangen. Die Zugabe erfolgt üblicherweise in fester oder gelöster Form direkt ins Anmachwasser, zum Zement, zum Trockengemisch oder zur fertigen Beton- oder Mörtelmischung.

Selbstverständlich können sie auch vor der Anwendung im Werk bei der Bindemittelherstellung oder dem vorfabrizierten trockenen Mörtel zugemischt werden

Die folgenden Beispiele erläutern die Erfindung:

### Beispiele

In den folgenden Beispielen wird der Einfluss der Einzelkomponenten eines erfindungsgemässen Beschleunigers dargestellt. Die Prüfmischungen setzten sich wie folgt zusammen:

| **Mischung A** | | **Mischung B** | |
|---|---|---|---|
| Portlandzement Typ I | 1.000 kg | Portlandzement Typ I | 1.000 kg |
| Sand 0-5 mm | 3.000 kg | Sand 0-5 mm | 3.000 kg |
| Wasser | 0.395 kg | Wasser | 0.465 kg |
| Superverflüssiger | 0.010 kg | Beschleuniger | 0.015 kg |
| Beschleuniger | 0.015 kg | | |

Von diesen Mischungen wurden prismatische Prüfkörper der Grösse 4x4x16 cm hergestellt und daran die Druckfestigkeiten bestimmt.

### Beispiel 1:

Dieses Beispiel zeigt den Effekt einer in einem erfindungsgemässen Beschleuniger verwendbaren α-Hydroxycarbonsäure auf die Endfestigkeit.

| **Mischung A** | |
|---|---|
| Zusatzmittel | Druckfestigkeit 28 Tage |
| Nullversuch (ohne Beschleuniger) | 55 N/mm² |
| Beschleuniger **1** (bestehend aus 14% THPED in Wasser) | 52 N/mm² |
| Beschleuniger **1** zusätzlich beinhaltend 20% Milchsäure | 59 N/mm² |
| THPED = N,N,N',N'-Tetrakis-(2-hydroxypropyl)-ethylendiamin | |

### Beispiel 2:

Beispiel zur Erläuterung der Wirkung von Thiocyanaten.

| **Mischung A** | |
|---|---|
| Zusatzmittel | Druckfestigkeit 8 h |
| Nullversuch (ohne Beschleuniger) | 2.0 N/mm² |
| Beschleuniger **2** bestehend aus 10 % TRIS, 4 % Natriumpyrosulfit und 6 % Milchsäure | 2.2 N/mm² |
| Beschleuniger **2** zusätzlich beinhaltend 10% Natriumthiocyanat | 4.1 N/mm² |
| TRIS = Tris-(hydroxymethyl)-aminomethan | |

### Beispiel 3:

Beispiel zur Erläuterung des Einflusses eines in einem erfindungsgemässen Beschleuniger verwendbaren Alkanolamines.

| **Mischung B** | |
|---|---|
| Zusatzmittel | Druckfestigkeit 1 Tag |
| Nullversuch (ohne Beschleuniger) | 24 N/mm² |
| Beschleuniger **3** bestehend aus 10 % Diethanolamin und 50 % Milchsäure | 26 N/mm² |
| Beschleuniger **3** (Diethanolamin durch N-Methyldiethanolamin ersetzt) | 32 N/mm² |

### Beispiel 4:

Beispiel zur Darstellung des Effektes eines in einem erfindungsgemässen Beschleuniger verwendbaren Nitrates. Versuchstemperatur 10°C.

| **Mischung B** | | |
|---|---|---|
| Zusatzmittel | Druckfestigkeit | |
| | 1 Tag | 2 Tage |
| Nullversuch (ohne Beschleuniger) | 6.4 N/mm² | 21 N/mm² |
| Beschleuniger **4** bestehend aus 10 % TRIS, 10 %Natriumthiocyanat und 5 % Milchsäure | 9.0 N/mm² | 24 N/mm² |
| Beschleuniger **4** zusätzlich beinhaltend 16 % Calciumnitrat | 18.0 N/mm² | 30 N/mm² |
| TRIS = Tris-(hydroxymethyl)-aminomethan | | |

In den folgenden Beispielen wird der Effekt eines erfindungsgemässen Beschleunigers auf die Frühfestigkeiten in Betonmischungen bei verschiedenen Temperaturen dargelegt. Die Mischung setzte sich wie folgt zusammen:

| **Mischung C** | |
|---|---|
| Portlandzement Typ I (350 kg/m³) | 9.150 kg |
| Zuschläge 0-32 mm (prEN 480-1 (1992)) | 50.000 kg |
| Beschleuniger | 0.1375 kg |

Aus diesen Mischungen wurden Würfel der Grösse 12x12x12 cm hergestellt und daran die Druckfestigkeiten bestimmt.
Der in diesen Mischungen verwendete erfindungsgemässe Beschleuniger **5** setzte sich zusammen aus:

| | |
|---|---|
| Tris-(hydroxymethyl)-aminomethan | 10 % |
| Milchsäure | 4 % |
| Natriumthiocyanat | 10 % |
| Calciumnitrat | 16 % |
| Wasser | 60 % |

### Beispiel 5:

Beispiel zur Illustration des Effektes eines erfindungsgemässen Beschleunigers bei 10°C.

| Zusatzmittel | W/Z | Druckfestigkeit | |
|---|---|---|---|
| | | 1 Tag | 2 Tage |
| Nullversuch (ohne Beschleuniger) | 0.490 | 12.2 N/mm² | 22.4 N/mm² |
| Kommerziell erhältlicher Beschleuniger basierend auf Calciumnitrat | 0.475 | 17.3 N/mm² | 25.8 N/mm² |
| Erfindungsgemässer Beschleuniger **5** | 0.475 | 19.0 N/mm² | 30.8 N/mm² |

### Beispiel 6:

Beispiel zur Illustration des Effektes eines erfindungsgemässen Beschleunigers bei 20°C.

| Zusatzmittel | W/Z | Druckfestigkeit | |
|---|---|---|---|
| | | 8 h | 1 Tag |
| Nullversuch (ohne Beschleuniger) | 0.510 | 1.4 N/mm² | 19.9 N/mm² |
| Erfindungsgemässer Beschleuniger **5** | 0.495 | 3.8 N/mm² | 29.3 N/mm² |

### Beispiel 7

Beispiel zur Illustration des Effektes eines erfindungsgemässen Beschleunigers bei 30°C.

| Zusatzmittel | W/Z | Druckfestigkeit | |
|---|---|---|---|
| | | 8h | 1 Tag |
| Nullversuch (ohne Beschleuniger) | 0.500 | 12.5 N/mm² | 25.7 N/mm² |
| Kommerziell erhältlicher Beschleuniger basierend auf Natriumthiocyanat | 0.495 | 13.4 N/mm² | 28.1 N/mm² |
| Erfindungsgemässer Beschleuniger **5** | 0.510 | 15.0 N/mm² | 29.0 N/mm² |

### Beispiel 8:

In diesem Beispiel wird der Unterschied eines erfindungsgemässen Beschleunigers gegenüber einem kommerziell erhältlichen, auf Calciumnitrat basierenden Beschleuniger und Calciumchlorid dargestellt. Die Versuche wurden bei 10°C durchgeführt. Die Mischung setzte sich wie folgt zusammen:

| **Mischung D** | |
|---|---|
| Portlandzement Typ I (300 kg/m³) | 7.850 kg |
| Zuschläge 0-32 mm (SIA 162 (1989)) | 50.000 kg |
| Superverflüssiger | 0.0785 kg |

| Zusatzmittel | G/G | W/Z | Druckfestigkeit | |
|---|---|---|---|---|
| | | | 1 Tag | 2 Tage |
| Nullversuch (ohne Beschleuniger) | - | 0.460 | 10.5 N/mm² | 26.7 N/mm² |
| Kommerziell erhältlicher Beschleuniger basierend auf Calciumnitrat | 1.0 % | 0.470 | 11.3 N/mm² | 26.0 N/mm² |
| Calciumchlorid 30%ige wässrige Lösung | 6.0 % | 0.480 | 12.7 N/mm² | 22.1 N/mm² |
| Erfindungsgemässer Beschleuniger **5** | 1.5% | 0.460 | 20.1 N/mm² | 33.0 N/mm² |

### Beispiel 9:

An diesem Versuch wird der Einfluss eines erfindungsgemässen Beschleunigers über einen Konzentrationsbereich von 0.5 - 2 % auf die Abbindezeiten aufgeführt. Die Abbindezeiten wurden nach SIA 215.001 (1991), identisch mit EN 196, Teil 3 (05.1987), mit der Vicat-Nadel bestimmt.

| | | |
|---|---|---|
| Die Mischung bestand aus: | Portlandzement Typ I | 300 g |
| | Quarzmehl K8 | 300 g |
| | W/Z-Wert | 0.540 |

Beschleuniger bestehend aus 10 % TRIS, 10 % Natriumthiocyanat, 4 % Natriumpyrosulfit und 6 % Milchsäure.

| Dosierung des erfindungsgemässen Beschleunigers | Abbindebeginn | Abbindeende |
|---|---|---|
| 0.0 % | 180′ | 250′ |
| 0.5 % | 150′ | 210′ |
| 1.0 % | 140′ | 190′ |
| 1.5 % | 120′ | 180′ |
| 2.0 % | 120′ | 180′ |

### Beispiel 10:

In diesem Beispiel wird der Effekt einer in einem erfindungsgemässen Beschleuniger verwendbaren α-Hydroxycarbonsäure mit und ohne Superverflüssiger auf die Frühfestigkeiten dargestellt.

| | |
|---|---|
| Mischung: | 1.000 kg Portlandzement Typ I |
| | 3.000 kg Sand 0 - 4 mm |
| | Wasser für konstantes Ausbreitmass 180 ± 5 mm |

Diesen Mischungen wurden die unten erwähnten Substanzen zugesetzt und prismatische Prüfkörper der Grösse 4x4x16 cm hergestellt. Dargestellt sind die prozentualen Festigkeiten nach den Zeiten 8 h und 24 h.

| | 8 h | 24 h |
|---|---|---|
| 0-Versuch | 100 | 100 |
| 0.1 % Mdea, 0.15 % NaNCS, 0.2 % NaNO₃ | 176 | 131 |
| + 0.06 % Milchsäure | 194 | 131 |
| + 0.12 % Milchsäure | 223 | 137 |
| + 0.18 % Milchsäure | 217 | 131 |
| 0.06 % Milchsäure allein | 100 | 100 |
| 0.12 % Milchsäure allein | 100 | 100 |
| 0.18 % Milchsäure allein | 94 | 100 |

| mit Zusatz von 1 % Superverflüssiger | | |
|---|---|---|
| | 8 h | 24 h |
| 0-Versuch | 100 | 100 |
| 0.1 % Mdea, 0.15 % NaNCS, 0.2 % NaNO₃ | 142 | 117 |
| + 0.06 % Milchsäure | 165 | 114 |
| + 0.12 % Milchsäure | 185 | 110 |
| + 0.18 % Milchsäure | 185 | 114 |
| 0.06 % Milchsäure allein | 97 | 96 |
| 0.12 % Milchsäure allein | 97 | 93 |
| 0.18 % Milchsäure allein | 90 | 96 |
| Mdea: N-Methyldiethanolamin | | |

Wie zu erwarten, hat der Einsatz von reiner Milchsäure in den angesprochenen Konzentrationen keinen, resp. einen verzögernden Einfluss auf die zur Diskussion stehenden Frühfestigkeiten. Jedoch wurde überraschenderweise gefunden, dass in der einem erfindungsgemässen Beschleuniger entsprechenden Kombination diese α-Hydroxycarbonsäure zusammen mit den vorhandenen Bestandteilen eine synergistische Wirkung in Bezug auf die Frühfestigkeiten ausübt und demzufolge eine unerlässliche Komponente nicht nur im Bezug auf die Endfestigkeit darstellt.

## Patentansprüche

1. Abbinde- und Erhärtungsbeschleuniger, dadurch gekennzeichnet, dass er in Kombination mindestens eine Nitrat- und/oder Sulfit-Komponente, mindestens eine Alkanolamin-Komponente, mindestens eine Thiocyanat-Komponente und mindestens eine Carbonsäure-Komponente enthält oder aus diesen Komponenten besteht.

2. Beschleuniger nach Anspruch 1, dadurch gekennzeichnet, dass die Thiocyanat-Komponente ein Alkali-, Erdalkali-, Ammoniumsalz oder eine Mischung derselben ist.

3. Beschleuniger nach Anspruch 1 oder 2, dadurch gekennzeichnet, dass die Alkanolamin-Komponente ein Salz einer organischen oder anorganischen Säure oder eine Mischung daraus ist, wobei maximal 50 % der Komponente aus Mono-, Di- oder Triethanolamin oder aus einer Mischung daraus besteht.

4. Beschleuniger nach einem der Ansprüche 1 bis 3, dadurch gekennzeichnet, dass die Carbonsäure-Komponente eine alpha-Hydroxymonocarbonsäure oder eine alpha-Aminocarbonsäure, oder deren Alkali-, Erdalkali-, Ammoniumsalz oder der entsprechende C₁-C₄-Alkylester oder eine Mischung daraus ist.

5. Beschleuniger nach einem der Ansprüche 1 bis 4, dadurch gekennzeichnet, dass die Nitrat- und/oder Sulfit-Komponente als Alkali-, Erdalkali-, Ammoniumsalz oder eine Mischung daraus vorliegt.

6. Beschleuniger nach einem der Ansprüche 1 bis 5, dadurch gekennzeichnet, dass er mindestens eine Thiocyanatkomponente in einer Menge von 1-20 %, mindestens eine Alkanolaminkomponente in einer Menge von 1-35 %, mindestens eine Carbonsäurekomponente in einer Menge von 1-25 % sowie mindestens eine Nitrat- und/oder Sulfitkomponente in einer Menge von 1-40 % enthält oder daraus besteht.

7. Beschleuniger nach einem der Ansprüche 1 bis 6, dadurch gekennzeichnet, dass die besagte Thiocyanatkomponente Natriumthiocyanat enthält oder daraus besteht.

8. Beschleuniger nach einem der Ansprüche 1 bis 7, dadurch gekennzeichnet, dass die besagte Thiocyanatkomponente Calciumthiocyanat enthält oder daraus besteht.

9. Beschleuniger nach einem der Ansprüche 1 bis 8, dadurch gekennzeichnet, dass die Alkanolaminkomponente Tris(hydroxymethyl)aminomethan enthält oder daraus besteht.

10. Beschleuniger nach einem der Ansprüche 1 bis 9, dadurch gekennzeichnet, dass die Alkanolaminkomponente Diisopropanolamin enthält oder daraus besteht.

11. Beschleuniger nach einem der Ansprüche 1 bis 10, dadurch gekennzeichnet, dass die Alkanolaminkomponente N-Methyldiethanolamin enthält oder daraus besteht.

12. Beschleuniger nach einem der Ansprüche 1 bis 11, dadurch gekennzeichnet, dass die Alkanolaminkomponente 2-Amino-2-methyl-1,3-propandiol enthält oder daraus besteht.

13. Beschleuniger nach einem der Ansprüche 1 bis 12, dadurch gekennzeichnet, dass die Alkanolaminkomponente N,N,N',N'-Tetrakis-(2-hydroxypropyl)-ethylendiamin enthält oder daraus besteht.

14. Beschleuniger nach einem der Ansprüche 1 bis 13, dadurch gekennzeichnet, dass die Alkanolaminkomponente N-Butyldiethanolamin enthält oder daraus besteht.

15. Beschleuniger nach einem der Ansprüche 1 bis 14, dadurch gekennzeichnet, dass die Alkanolaminkomponente Monoisopropanolamin enthält oder daraus besteht.

16. Beschleuniger nach einem der Ansprüche 1 bis 15, dadurch gekennzeichnet, dass die Alkanolaminkomponente Triisopropanolamin enthält oder daraus besteht.

17. Beschleuniger nach einem der Ansprüche 1 bis 16, dadurch gekennzeichnet, dass die Alkanolaminkomponente 2-Amino-2-methyl-1-propanol enthält oder daraus besteht.

18. Beschleuniger nach einem der Ansprüche 1 bis 17, dadurch gekennzeichnet, dass die Carbonsäurekomponente Milchsäure, eine alpha-Hydroxymonocarbonsäure, enthält oder daraus besteht.

19. Beschleuniger nach einem der Ansprüche 1 bis 18, dadurch gekennzeichnet, dass die Carbonsäurekomponente Mandelsäure, eine alpha-Hydroxymonocarbonsäure, enthält oder daraus besteht.

20. Beschleuniger nach einem der Ansprüche 1 bis 19, dadurch gekennzeichnet, dass die Carbonsäurekomponente D,L-Asparaginsäure, eine alpha-Aminocarbonsäure, enthält oder daraus besteht.

21. Beschleuniger nach einem der Ansprüche 1 bis 20, dadurch gekennzeichnet, dass die Nitratkomponente Natriumnitrat enthält oder daraus besteht.

22. Beschleuniger nach einem der Ansprüche 1 bis 21, dadurch gekennzeichnet, dass die Nitratkomponente Calciumnitrat enthält oder daraus besteht.

23. Beschleuniger nach einem der Ansprüche 1 bis 22, dadurch gekennzeichnet, dass die Sulfitkomponente Natriumsulfit enthält oder daraus besteht.

24. Beschleuniger nach einem der Ansprüche 1 bis 23, dadurch gekennzeichnet, dass die Sulfit-Komponente Natriumpyrosulfit enthält oder daraus besteht.

25. Beschleuniger nach einem der Ansprüche 1 bis 24, dadurch gekennzeichnet, dass er als Pulver, dispergiert in Wasser oder einem nichtwässrigen Lösungsmittel oder gelöst in Wasser vorliegt.

26. Verfahren zur Beschleunigung des Abbindens und Erhärtens eines hydraulischen Bindemittels in reiner Form oder als Abmischung mit latent hydraulischen Bindemitteln, sowie daraus hergestelltem Mörtel und Beton, dadurch gekennzeichnet, dass einem Gemisch, welches das genannte Bindemittel enthält 0,2 bis 5,0 Gew.-%, bezogen auf das Gewicht dieses Bindemittels, eines Abbindeund Erhärtungsbeschleunigers gemäss einem der Ansprüche 1 bis 25 zugegeben werden.

27. Verfahren nach Anspruch 26, dadurch gekennzeichnet, dass der Beschleuniger dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben wird.

28. Verfahren nach Anspruch 26 oder 27, dadurch gekennzeichnet, dass der pulverförmige Abbinde- und Erhärtungsbeschleuniger vorgemischt in hydraulischen Bindemitteln oder in trockenem Mörtel und Beton zur Anwendung gelangt.

29. Verfahren nach einem der Ansprüche 26 bis 28, dadurch gekennzeichnet, dass der Abbinde- und Erhärtungsbeschleuniger bei der Herstellung des Bindemittels im Werk zugemischt wird.

30. Verfahren nach einem der Ansprüche 26 bis 29, dadurch gekennzeichnet, dass der Betonmischung vor dem Einbringen zusätzlich ein weiterer Abbindebeschleuniger wie Wasserglas, Aluminat, Calziumsulfoaluminat oder dergleichen flüssig oder pulverförmig im Mischer, der Förderpumpe oder über einen statischen Mischer mittels Pulver- oder Flüssigdosiergerät zugegeben wird.

31. Verfahren nach einem der Ansprüche 26 bis 30, dadurch gekennzeichnet, dass das hydraulische Bindemittel Zement ist.

32. Verwendung des Beschleunigers nach einem der Ansprüche 1 bis 25 als Zusatzmittel zu hydraulischen Bindemitteln oder hydraulische Bindemittel enthaltenden Mischungen.

33. Hydraulische Bindemittel-Vormischung, dadurch gekennzeichnet, dass sie das Bindemittel und den Beschleuniger nach einem der Ansprüche 1 bis 25 enthält oder daraus besteht.

## Claims

1. Setting- and hardening-accelerator characterised in that it contains in combination at least a nitrate- and/or sulfite component, at least an alkanolamine component, at least a thiocyanate component and at least a carboxylic acid component or consists of these components.

2. Accelerator according to claim 1 characterised in that the thiocyanate component is an alkali-, alkaline earth metal-, ammonium-salt or a mixture thereof.

3. Accelerator according to claim 1 or 2 characterised in that the alkanolamine component is a salt of an organic or inorganic acid or a mixture thereof, wherein a maximum of 50% of the component consists of mono-, di- or triethanolamine or a mixture thereof.

4. Accelerator according to one of the claims 1 to 3 characterised in that the carboxylic acid component is an alpha-hydroxymonocarboxylic acid or an alpha-aminocarboxylic acid, or their alkali-, alkaline earth metal-, ammonium-salts, or the corresponding C₁-C₄-alkyl ester or a mixture thereof.

5. Accelerator according to one of the claims 1 to 4 characterised in that the nitrate- and/or sulfite component is present as alkali-, alkaline earth metal-, ammonium-salt or as a mixture thereof.

6. Accelerator according to one of the claims 1 to 5 characterised in that it contains or consists of at least one thiocyanate component in a quantity of 1-20 %, at least one alkanolamine component in a quantity of 1-35 %, at least one carboxylic acid component in a quantity of 1-25 % as well as at least one nitrate- and/or sulfite component in a quantity of 1-40 %.

7. Accelerator according to one of the claims 1 to 6 characterised in that said thiocyanate component contains sodium-thiocyanate or is composed thereof.

8. Accelerator according to one of the claims 1 to 7 characterised in that said thiocyanate component contains calcium-thiocyanate or consists thereof.

9. Accelerator according to one of the claims 1 to 8 characterised in that said alkanolamine component contains tris(hydroxymethyl)aminomethane or consists thereof.

10. Accelerator according to one of the claims 1 to 9 characterised in that said alkanolamine component contains diisopropanolamine or consists thereof.

11. Accelerator according to one of the claims 1 to 10 characterised in that said alkanolamine component contains N-methyldiethanolamine or consists thereof.

12. Accelerator according to one of the claims 1 to 11 characterised in that said alkanolamine component contains 2-amino-2-methyl-1,3-propandiol or consists thereof.

13. Accelerator according to one of the claims 1 to 12 characterised in that said alkanolamine component contains N,N,N',N'-tetrakis-(2-hydroxypropyl)ethylenediamine or consists thereof.

14. Accelerator according to one of the claims 1 to 13 characterised in that said alkanolamine component contains N-butyldiethanolamine or consists thereof.

15. Accelerator according to one of the claims 1 to 14 characterised in that said alkanolamine component contains monoisopropanolamine or consists thereof.

16. Accelerator according to one of the claims 1 to 15 characterised in that said alkanolamine component contains triisopropanolamine or consists thereof.

17. Accelerator according to one of the claims 1 to 16 characterised in that said alkanolamine component contains 2-amino-2-methyl-1-propanol or consists thereof.

18. Accelerator according to one of the claims 1 to 17 characterised in that the carboxylic acid component contains lactic acid, an alpha-hydroxymonocarboxylic acid, or is composed thereof.

19. Accelerator according to one of the claims 1 to 18 characterised in that the carboxylic acid component contains mandelic acid, an alpha-hydroxymonocarboxylic acid, or is composed thereof.

20. Accelerator according to one of the claims 1 to 19 characterised in that the carboxylic acid component contains D,L-aspartic acid, an alpha-aminocarboxylic acid, or is composed thereof.

21. Accelerator according to one of the claims 1 to 20 characterised in that the nitrate component contains potassium-nitrate or is composed thereof.

22. Accelerator according to one of the claims 1 to 21 characterised in that the nitrate component contains calcium-nitrate or is composed thereof.

23. Accelerator according to one of the claims 1 to 22 characterised in that the sulfite component contains potassium-sulfite or is composed thereof.

24. Accelerator according to one of the claims 1 to 23 characterised in that the sulfite component contains potassium-pyrosulfite or is composed thereof.

25. Accelerator according to one of the claims 1 to 24 characterised in that it is a powder, dispersed in water or in a non-aqueous solvent, or dissolved in water.

26. Method to accelerate the setting and hardening of a hydraulic binder in pure form or as a mixture with latent hydraulic binders, as well as mortar and concrete produced therefrom, characterised in that 0.2 to 5.0 weight %, referring to the weight of this binder, of a setting- and hardening-accelerator according the claims 1 to 25 are added to a mixture containing said binder.

27. Method according to claim 26 characterised in that the accelerator is added directly into the mixture to the dry or water-mixed binder, mortar or concrete in the factory, on the construction site, in the mixer, in the feeding-pump or through a static mixer with a dosage apparatus for powders or a dosage apparatus for liquids.

28. Method according to claim 26 or 27 characterised in that the powder-like setting- and hardening-accelerator is applied in a pre-mixed form in hydraulic binders or in dry mortar and concrete.

29. Method according to claim 26 to 28 characterised in that the setting- and hardening-accelerator is introduced during production of the binder in the manufacturing-plant.

30. Method according to claim 26 to 29 characterised in that, before admixing, a further binder accelerator such as waterglass, aluminate, calcium sulfoaluminate or the like is introduced to the concrete mix as a liquid or as a powder, in the mixer, the feeding-pump or through a static mixer, by means of a dosage apparatus for powders or liquids.

31. Method according to claim 26 to 30 characterised in that the hydraulic binder is cement.

32. Use of the accelerator according to one of the claims 1 to 25 as admixture to a hydraulic binder or mixtures containing hydraulic binders.

33. Hydraulic binder pre-mix, characterised in that it contains the binder and the accelerator according to claims 1 to 25 or is composed thereof.

## Revendications

1. Accélérateur de prise et de durcissement, caractérisé en ce qu'il contient ou consiste en une combinaison d'au moins une composante de nitrate et/ou de sulfite, au moins une composante d'alcanolamine, au moins une composante de thiocyanure et au moins une composante d'acide carboxylique.

2. Accélérateur suivant la revendication 1, caractérisé en ce que la composante de thiocyanure est un sel alcalin, alcalino-terreux, d'ammonium ou un mélange de ce-dernier.

3. Accélérateur suivant la revendication 1 ou 2, caractérisé en ce que la composante d'alcanolamine est un sel d'un acide organique ou minéral ou un mélange de ce-dernier, dont 50% de la composante consiste de mono-, di- ou triethanolamine ou un mélange de ce-dernier.

4. Accélérateur suivant l'une des revendications 1 à 3, caractérisé en ce que la composante d'acide carboxylique est un acide alpha-hydroxy monocarboxylique ou un acide alpha-aminocarboxylique ou son sel alcalin, alcalino-terreux, d'ammonium ou son ester d'alkyle respectif ou un mélange de ce-dernier.

5. Accélérateur suivant l'une des revendications 1 à 4, caractérisé en ce que la composante de nitrate et/ou de sulfite est un sel alcalin, alcalino-terreux, d'ammonium ou d'un mélange de ce-dernier.

6. Accélérateur suivant l'une des revendications 1 à 5, caractérisé en ce qu'il contient de ou consiste en au moins une composante d'alcanolamine dans une quantité de 1-35%, en au moins une composante d'acide carboxylique dans une quantité de 1-25%, ainsi que en au moins une composante de nitrate et/ou de sulfite dans une quantité de 1-40%.

7. Accélérateur suivant l'une des revendications 1 à 6, caractérisé en ce que la composante de thiocyanure contient de ou consiste en thiocyanure de sodium.

8. Accélérateur suivant l'une des revendications 1 à 7, caractérisé en ce que la composante de thiocyanure contient de ou consiste en thiocyanure de calcium.

9. Accélérateur suivant l'une des revendications 1 à 8, caractérisé en ce que la composante d'alcanolamine contient de ou consiste en tris(hydroxyméthyl)aminométhane.

10. Accélérateur suivant l'une des revendications 1 à 9, caractérisé en ce que la composante d'alcanolamine contient de ou consiste en diisopropanolamine.

11. Accélérateur suivant l'une des revendications 1 à 10, caractérisé en ce que la composante d'alcanolamine contient de ou consiste en N-méthylediethanolamine.

12. Accélérateur suivant l'une des revendications 1 à 11, caractérisé en ce que la composante d'alcanolamine contient de ou consiste en 2-amino-2-méthyle-1,3-propandiol.

13. Accélérateur suivant l'une des revendications 1 à 12, caractérisé en ce que la composante d'alcanolamine contient de ou consiste en N,N,N'N'-tétrakis-(2-hydroxypropyl)ethylènediamine.

14. Accélérateur suivant l'une des revendications 1 à 13, caractérisé en ce que la composante d'alcanolamine contient de ou consiste en N-butylediethanolamine.

15. Accélérateur suivant l'une des revendications 1 à 14, caractérisé en ce que la composante d'alcanolamine contient de ou consiste en monoisopropanolamine.

16. Accélérateur suivant l'une des revendications 1 à 15, caractérisé en ce que la composante d'alcanolamine contient de ou consiste en triisopropanolamine.

17. Accélérateur suivant l'une des revendications 1 à 16, caractérisé en ce que la composante d'alcanolamine contient de ou consiste en 2-amino-2-méthyle-1-propanol.

18. Accélérateur suivant l'une des revendications 1 à 17, caractérisé en ce que la composante d'acide carboxylique contient de ou consiste en acide lactique, un acide alpha-hydroxymonocarboxylique.

19. Accélérateur suivant l'une des revendications 1 à 18, caractérisé en ce que la composante d'acide carboxylique contient de ou consiste en acide mandélique, un acide alpha-hydroxymonocarboxylique.

20. Accélérateur suivant l'une des revendications 1 à 18, caractérisé en ce que la composante d'acide carboxylique contient de ou consiste en acide D,L-aspartique, un acide alpha-aminocarboxylique.

21. Accélérateur suivant l'une des revendications 1 à 20, caractérisé en ce que la composante de nitrate contient de ou consiste en nitrate de sodium.

22. Accélérateur suivant l'une des revendications 1 à 21, caractérisé en ce que la composante de nitrate contient de ou consiste en nitrate de calcium.

23. Accélérateur suivant l'une des revendications 1 à 22, caractérisé en ce que la composante de sulfite contient de ou consiste en sulfite de sodium.

24. Accélérateur suivant l'une des revendications 1 à 23, caractérisé en ce que la composante de sulfite contient de ou consiste en pyrosulfite de sodium.

25. Accélérateur suivant l'une des revendications 1 à 23, caractérisé en ce qu'il est présent sous forme d'une poudre, dispersée dans l'eau ou dans un solvant non-aqueux ou dissout dans l'eau.

26. Procédé pour accélérer la prise et le durcissement d'un liant hydraulique sous forme pure ou sous forme d'un mélange avec des liants hydrauliques latents, ainsi que des mortiers et des bétons ainsi fabriqués, caractérisé en ce qu'au mélange, contenant ledit liant, 0,2 à 5,0% en poids relatif au poids du liant d'un accélérateur de prise et de durcissement suivant les revendications 1 à 25 soit rajouté.

27. Procédé suivant la revendication 26, caractérisé en ce que l'accélérateur est rajouté directement au liant, mortier ou béton sec ou il est gâché dans l'usine, au chantier, dans la bétonneuse, dans la pompe de projection ou par un malaxeur statique avec un instrument de dosage à poudre ou un instrument de dosage à liquide.

28. Procédé suivant la revendication 26 ou 27, caractérisé en ce que l'accélérateur de prise et de durcissement poudreux est employé d'une manière prémelangée dans des liants hydrauliques ou du mortier sec ou du béton.

29. Procédé suivant l'une des revendications 26 à 28, caractérisé en ce que l'accélérateur de prise et de durcissement est rajouté lors de la fabrication du liant à l'usine.

30. Procédé suivant l'une des revendications 26 à 29, caractérisé en ce que, avant la rentrée un accélérateur de prise supplémentaire comme du silicate de potasse, de l'aluminate, du sulfoaluminate de calcium et autres soit rajoutés sous forme liquide ou poudreuse dans le malaxeur par un instrument de dosage à poudre ou à liquide.

31. Procédé suivant l'une des revendications 26 à 30, caractérisé en ce que le liant hydraulique est du ciment.

32. Utilisation de l'accélérateur suivant l'une des revendications 1 à 25 comme additif aux liants hydrauliques ou aux mélanges contenant des liants hydrauliques.

33. Pré-mélange de liant hydraulique, caractérisé en ce qu'il contient ou consiste d'un accélérateur suivant l'une des revendications 1 à 25.
